# EUROPEAN PATENT SPECIFICATION

(11) **EP 1 986 052 B1**
(45) Date of publication and mention of the grant of the patent: **02.09.2020**
(21) Application number: 08100359.2
(22) Date of filing: 11.01.2008
(51) Int. Cl.: G03G 15/00, G03G 15/06

(54) **High voltage power controlling apparatus of image forming apparatus and method thereof**
Hochspannungs-Stromsteuerungsvorrichtung einer bilderzeugenden Vorrichtung und Verfahren dafür
Appareil de contrôle d'alimentation haute tension pour appareil de formation d'image et procédé correspondant

(30) Priority: 24.04.2007 KR 20070040056
(43) Date of publication of application: 29.10.2008
(73) Proprietor: Hewlett-Packard Development Company, L.P., Spring, TX 77389 (US)
(72) Inventor: Cho, Jong-hwa, Yeongtong-gu Suwon-si Gyeonggi-do (KR); Oh, Chul-woo, Gyeonggi-do (KR)
(74) Representative: Appleyard Lees IP LLP

(56) References cited:
- JP-A- H0 865 893
- JP-A- H1 028 328
- JP-A- 2001 169 546
- US-A1- 2005 248 904
- US-A1- 2006 091 916

## Description

The present general inventive concept relates to a high voltage power controlling apparatus of an image forming apparatus which reduces a number of voltage transformers that supply direct current (DC) power in a high voltage power supply which is applied to a laser printer or a laser multi-function peripheral device, so as to reduce both a size of the image forming apparatus and material costs, and a method thereof.

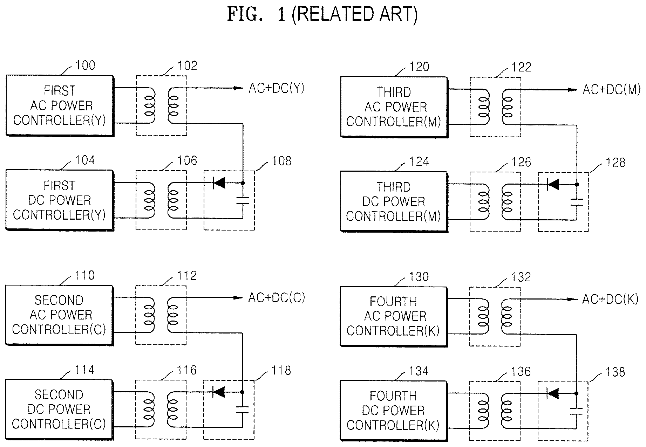

FIG. 1 is a circuit diagram of a conventional high voltage power controlling apparatus supplied to each cyan (C), magenta (M), yellow (Y), and black (K) developer. Referring to FIG. 1, the conventional high voltage power controlling apparatus includes first through fourth alternating current (AC) power controllers 100, 110, 120, and 130, first through fourth voltage transformers 102, 112, 122, and 132, first through fourth direct current (DC) power controllers 104, 114, 124, and 134, fifth through eighth voltage transformers 106, 116, 126, and 136, and first through fourth rectifiers 108, 118, 128, and 138, in order to provide an overlap high voltage of AC and DC to each cyan (C), magenta (M), yellow (Y), and black (K) developer in an image forming apparatus using a single path method.

In order to output the AC high voltage, the first through fourth AC power controllers 100, 110, 120, and 130 generate waveforms. Then, the first through fourth voltage transformers 102, 112, 122, and 132 respectively amplify the waveforms of the first through fourth AC power controllers 100, 110, 120, and 130 to output AC power. Then, the first through fourth DC power controllers 104, 114, 124, and 134 output waveforms, and the fifth through eighth voltage transformers 106, 116, 126, and 136 and the first through fourth rectifiers 108, 118, 128, and 138 output the waveforms as DC power. Thus, the DC power overlaps with the AC power and then is output.

However, in the image forming apparatus using the single path method, Y, C, M, and K developers are distinguished from one another. Also, a number of DC power controllers and the number of AC power controllers must be each equal to a number of Y, C, M, and K developers in order to supply a high voltage developer voltage to each of the Y, C, M, and K developers. In addition, a number of voltage transformers and a number of rectifiers must be each greater than or equal to a number of Y, C, M, and K developers. As a result, the image forming apparatus becomes bulky and the material costs for the components constituting the image forming apparatus are high. High voltage power controlling apparatuses known from the prior art are shown in JP H08 65893 A and US 2005/248904 A1.

Provided is a high voltage power controlling apparatus of an image forming apparatus according to claim 1 and a method of controlling a high voltage power controlling apparatus of an image forming apparatus according to claim 7.

Embodiments of the present invention concept provide a high voltage power controlling apparatus of an image forming apparatus having a simplified circuit structure, which controls an overlapping power of an alternating current (AC) and a direct current (DC) that is supplied to each of yellow (Y), cyan (C), magenta (M), and black (K) developers.

For a better understanding of the invention, and to show how embodiments of the same may be carried into effect, reference will now be made, by way of example, to the accompanying diagrammatic drawings in which:
FIG. 1 is a circuit diagram of a conventional high voltage power controlling apparatus to control high voltage power supplied to each of a plurality of developers;
FIG. 2 is a circuit diagram illustrating a high voltage power controlling apparatus of an image forming apparatus, according to an embodiment of the present general inventive concept; and
FIG. 3 is a circuit diagram of each first through fourth direct current (DC) supply of FIG. 2, according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

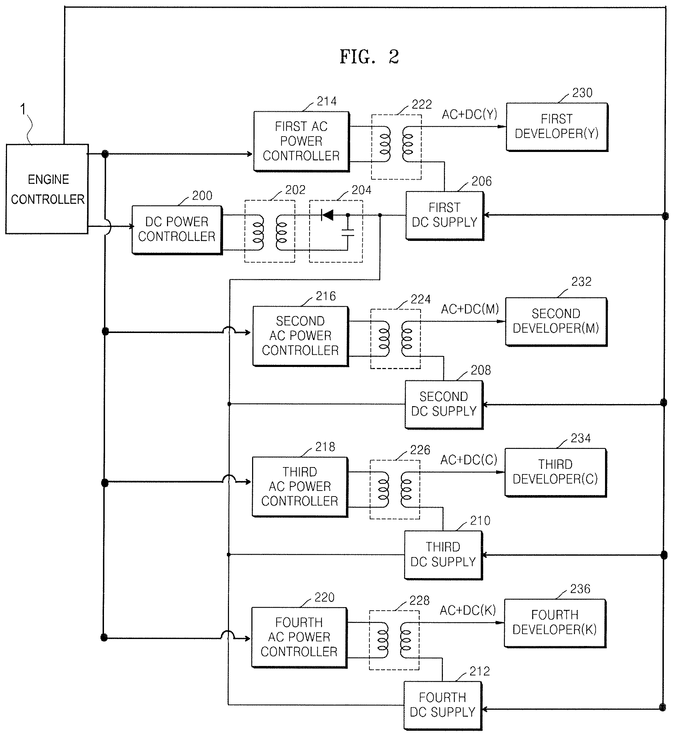

FIG. 2 is a circuit diagram illustrating a high voltage power controlling apparatus of an image forming apparatus according to an embodiment of the present general inventive concept. Referring to FIG. 2, the high voltage power controlling apparatus includes a direct current (DC) power controller 200, a first voltage transformer 202, a rectifier 204, first, second, third, and fourth DC supplies 206, 208, 210, and 212, first through fourth alternating current (AC) power controllers 214, 216, 218, and 220, and second, third, fourth, and fifth voltage transformers 222, 224, 226, and 228. The high voltage power controlling apparatus includes cyan (C), magenta (M), yellow (Y), and black (K) developers as later described. However, the components of the high voltage power controlling apparatus may vary depending on a number of developers being used.

The DC power controller 200 converts a first pulse width modulation (PWD) signal provided from an engine controller 1 into a switching waveform signal and outputs the switching waveform signal to a first side of the first voltage transformer 202. A detailed operation of the DC power controller 200 is similar to that described in the related art, and thus a detailed description thereof will be omitted herein.

The first voltage transformer 202 transforms the switching waveform signal output from the DC power controller 200 according to a turns ratio of the first voltage transformer 202 and outputs the transformed power to the rectifier 204. Since a transformer contains a certain number of turns of wire, the turns ratio is defined as the ratio of turns of wire in a primary winding of the transformer to the number of turns of wire in a secondary winding of the transformer. For example, if the turns ratio of the first voltage transformer 202 is 4 to 1, and 40 volts are placed across a primary winding of the first voltage transformer 202, 10 volts will result across a secondary winding of the first voltage transformer 202 (i.e., 40/4 = 10).

The rectifier 204 rectifies the power output from the first voltage transformer 202 into DC power and outputs the DC power to the first, second, third, and fourth DC supplies 206, 208, 210, and 212. To do so, the rectifier 204 includes a capacitor and a diode as illustrated in FIG. 2. A detailed operation of the rectifier 204 is similar to that described in the related art, and thus a detailed description thereof will be omitted herein.

The first, second, third, and fourth DC supplies 206, 208, 210, and 212 adjust the DC power rectified by the rectifier 204 to a predetermined level, and respectively output the DC power to second sides of the second, third, fourth, and fifth voltage transformers 222, 224, 226, and 228.

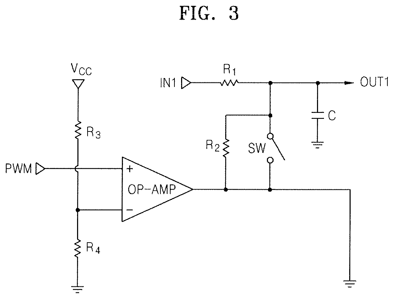

FIG. 3 is a circuit diagram of each of the first, second, third, and fourth DC supplies 206, 208, 210, and 212 illustrated in FIG. 2, according to an embodiment of the present general inventive concept. As illustrated in FIG. 3, each of the first, second, third, and fourth DC supplies 206, 208, 210, and 212 includes first and second resistors R1 and R2, an operational amplifier OP AMP, a switching unit SW, and a capacitor C. If the DC power rectified by the rectifier 204 is input through an input node IN1, the first and second resistors R1 and R2 divide the rectified DC power according to a resistance ratio of the first and second resistors R1 and R2.

The operation amplifier OP AMP compares a third PWM signal input into a positive node with a reference voltage Vcc input into a negative node so as to output a comparison signal. More specifically, the third PWM signal input from the engine controller 1 is directly input into the positive node of the operational amplifier OP AMP, and the reference voltage Vcc is first divided by third and fourth resistors R3 and R4 and then is input into the negative node of the operational amplifier OP AMP. The operational amplifier OP AMP compares the third PWM signal with the divided reference voltage Vcc and then outputs the comparison signal obtained from the comparison result to the switching unit SW.

The switching unit SW performs a switching operation according to the comparison signal of the operational amplifier OP AMP so as to adjust a power level of DC power divided by the first and second resistors R1 and R2. The power level of the DC power that is to be supplied to a corresponding developer is adjusted by the switching operation of the switching unit SW, and the power level is complementary to power levels of DC powers that are to be supplied to other developers. The DC power having the adjusted power level is output to the second side of one of the second, third, fourth, and fifth voltage transformers 222, 224, 226, and 228, respectively, through an output node OUT1. The capacitor C, as illustrated in FIG. 3, smoothes any existing ripples of the DC power having the adjusted power level.

The first, second, third, and fourth AC power controllers 214, 216, 218, and 220 transform a second PWM signal provided from the engine controller 1 into switching waveform signals and respectively output the switching waveform signals to first sides of the second, third, fourth, and fifth voltage transformers 222, 224, 226, and 228. Detailed operations of the first, second, third, and fourth AC power controllers 214, 216, 218, and 220 are similar to that described in the related art, and thus detailed descriptions thereof will be omitted herein.

The second, third, fourth, and fifth voltage transformers 222, 224, 226, and 228 transform the switching waveform signals respectively output from the first, second, third, and fourth AC power controllers 214, 216, 218, and 220 according to turns ratios of each of the second, third, fourth, and fifth voltage transformers 222, 224, 226, and 228.

The transformed AC power of the second, third, fourth, and fifth voltage transformers 222, 224, 226, and 228 respectively overlaps with DC power having predetermined levels adjusted by the first, second, third, and fourth DC supplies 206, 208, 210, and 212 at the second sides of the second, third, fourth, and fifth voltage transformers 222, 224, 226, and 228. The AC and DC power of the second, third, fourth, and fifth voltage transformers 222, 224, 226, and 228 that overlap are respectively supplied to first, second, third, and fourth developers which are respectively located in first, second, third, and fourth developing units 230, 232, 234, and 236, and thus used as power to drive the first, second, third, and fourth developing units 230, 232, 234, and 236 that respectively include Y, M, C, and K developers. Each one of the first, second, third, and fourth developing the 230, 232, 234, and 236 may expel Y, M, C, and K developers, respectively, according to unique predetermined AC and DC power levels.

As described above, in a high voltage power controlling apparatus of an image forming apparatus according to an embodiment of the present general inventive concept, a number of voltage dividers to supply DC power and a number of rectifiers can be minimized to reduce a size of the image forming apparatus. Also, components of the image forming apparatus can be simplified so as to reduce a unit cost of the image forming apparatus.

## Claims

1. A high voltage power controlling apparatus of an image forming apparatus, comprising:
a single DC (direct current) power controller (200) adapted to convert and output a first PWM (pulse width modulation) signal provided from an engine controller (1) into a switching waveform signal;
a first voltage transformer (202) adapted to transform the switching waveform signal output from the single DC power controller;
a rectifier (204) adapted to rectify the output power transformed by the first voltage transformer into DC power;
first through N, where N is a positive integer greater than one, DC supplies (206, 208...) adapted to adjust and output the DC power rectified by the rectifier (204) such that the DC power is adjusted to a predetermined level;
first through N AC (alternating current) power controllers (214, 216...) corresponding to the first through N DC power supplies, adapted to convert and output a second PWM signal provided from the engine controller (1) into switching waveform signals; and
second through N+1 voltage transformers (224, 226...) adapted to transform the switching waveform signals output from the first through N AC power controllers, to overlap the transformed powers with the DC powers having predetermined levels of the first through N DC supplies, and to output the overlapped powers to first through N developers (230, 232...), respectively.

2. The high voltage power controlling apparatus of claim 1, wherein each of the first through N DC supplies (206, 208...) comprises:
first (R1) and second (R2) resistors adapted to divide the rectified DC power;
an operational amplifier adapted to compare a third PWM signal input into a positive node of the operational amplifier with a reference voltage input into a negative node of the operational amplifier, and to output a comparison signal; and
a switching unit (SW) adapted to perform a switching operation according to the comparison signal of the operational amplifier to adjust a power level of the DC power.

3. The high voltage power controlling apparatus of claim 2, wherein each of the first through N DC supplies (206, 208...) further comprises:
a capacitor (C) adapted to smooth the ripples of the DC power having the adjusted power level.

4. The high voltage power controlling apparatus of any preceding claim, wherein the first through N developers (230, 232...) respectively are C (cyan), M (magenta), Y (yellow), and K (black) developers.

5. The high voltage power controlling apparatus of any preceding claim, comprising:
first through N developers (230, 232...) adapted to each expel a developer based on the predetermined DC and AC power levels.

6. The high voltage power controlling apparatus of claim 5, wherein the transforming of each of the switching waveform signals output from the first through N AC power controllers is based on turns ratios of each of the first through N AC power controllers.

7. A method of controlling a high voltage power of an image forming apparatus, comprising:
converting and outputting, by a single DC (direct current) power controller (200), a first PWM (pulse width modulation) signal provided from an engine controller (1) into a switching waveform signal;
transforming, by a first voltage transformer (202), the switching waveform signal from the single DC power controller into an output power;
rectifying, by a rectifier (204), the transformed output power into DC power;
adjusting and outputting, by first through N, where N is a positive integer greater than one, DC supplies (206, 208...), the rectified DC power such that the DC power is adjusted to a predetermined level;
converting and outputting, by first through N AC (alternating current) power controllers (214, 216...) corresponding to the first through N DC power supplies, a second PWM signal provided from the engine controller (1) into switching waveform signals;
transforming, by second through N+1 voltage transformers (224, 226...), the switching waveform signals output from the first through N AC power controllers to overlap the transformed powers with the DC powers having predetermined levels of the first through N DC supplies in a plurality of voltage transformers; and
outputting, by the second through N+1 voltage transformers (224, 226...), the overlapped powers to first through N developers (230, 232...), respectively.

8. The method of controlling a high voltage power of an image forming apparatus of claim 7, wherein the method further comprises:
dividing, by first (R1) and second (R2) resistors of each of the first through N DC supplies (206, 208...), the rectified DC power;
comparing, by an operational amplifier of each of the first through N DC supplies (206, 208...), a third PWM signal with a reference voltage, and outputting a comparison signal; and switching, by a switching unit (SW) of each of the first through N DC supplies (206, 208...), according to the comparison signal to adjust a power level of the DC power.

9. The method of controlling a high voltage power of an image forming apparatus of claim 8, wherein the method further comprises:
smoothing, by a capacitor (C) of each of the first through N DC supplies (206, 208...), ripples of the DC power having the adjusted power level.

10. The method of controlling a high voltage power of an image forming apparatus of any of claims 7 to 9, wherein the first through N developers (230, 232...) respectively are C (cyan), M (magenta), Y (yellow), and K (black) developers.

## Patentansprüche

1. Hochspannungsleistungssteuervorrichtung einer Bilderzeugungsvorrichtung, die Folgendes umfasst:
eine einzelne Gleichstromleistungssteuervorrichtung (200), die geeignet ist, ein erstes PWM(Pulsweitenmodulation)-Signal, das von einer Motorsteuervorrichtung (1) bereitgestellt wird, in ein Schaltwellenformsignal umzuwandeln und auszugeben;
einen ersten Spannungstransformator (202), der geeignet ist, das Schaltwellenformsignal, das von der einzelnen Gleichstromleistungssteuervorrichtung ausgegeben wird, zu transformieren;
einen Gleichrichter (204), der geeignet ist, die Ausgangsleistung, die durch den ersten Spannungstransformator in Gleichstromleistung umgewandelt wird, gleichzurichten;
eine erste bis N, wobei N eine positive ganze Zahl größer als eins ist, Gleichstromversorgung (206, 208...), die geeignet sind, die Gleichstromleistung, die durch den Gleichrichter (204) gleichgerichtet wird, derart einzustellen und auszugeben, dass die Gleichstromleistung auf einen vorgegebenen Pegel eingestellt wird;
eine erste bis N Wechselstromleistungssteuervorrichtung (214, 216...), die der ersten bis N Gleichstromversorgung entsprechen und geeignet sind, ein zweites PWM-Signal, das von der Motorsteuervorrichtung (1) bereitgestellt wird, in Schaltwellenformsignale umzuwandeln und auszugeben; und
einen zweiten bis bis N+1 Spannungstransformator (224, 226...), die geeignet sind, die Schaltwellenformsignale, die von der ersten bis N Wechselstromleistungssteuervorrichtung ausgegeben werden, zu transformieren, um die transformierten Leistungen mit den Gleichstromleistungen mit vorgegebenen Pegeln der ersten bis N Gleichstromversorgung zu überlappen und die überlappten Leistungen jeweils an einen ersten bis N Entwickler (230, 232...) auszugeben.

2. Hochspannungsleistungssteuervorrichtung nach Anspruch 1, wobei jede der ersten bis N Gleichstromversorgung (206, 208...) Folgendes umfasst:
einen ersten (R1) und einen zweiten (R2) Widerstand, die geeignet sind, die gleichgerichtete Gleichstromleistung zu teilen;
einen Operationsverstärker, der geeignet ist, ein drittes PWM-Signal, das in einen positiven Knoten des Operationsverstärkers eingegeben wird, mit einer Referenzspannung zu vergleichen, die in einen negativen Knoten des Operationsverstärkers eingegeben wird, und ein Vergleichssignal auszugeben; und
eine Schalteinheit (SW), die geeignet ist, einen Schaltvorgang entsprechend dem Vergleichssignal des Operationsverstärkers durchzuführen, um einen Leistungspegel der Gleichstromleistung einzustellen.

3. Hochspannungsleistungssteuervorrichtung nach Anspruch 2, wobei jede der ersten bis N Gleichstromversorgung (206, 208...) ferner Folgendes umfasst:
einen Kondensator (C), der geeignet ist, die Welligkeiten der Gleichstromleistung mit dem eingestellten Leistungspegel zu glätten.

4. Hochspannungsleistungssteuervorrichtung nach einem der vorhergehenden Ansprüche, wobei der erste bis N Entwickler (230, 232...) jeweils C(Cyan)-, M(Magenta)-, Y(Gelb)- und K(Schwarz)- Entwickler sind.

5. Hochspannungsleistungssteuervorrichtung nach einem der vorhergehenden Ansprüche, die Folgendes umfasst:
einen ersten bis N Entwickler (230, 232...), die geeignet sind, basierend auf den vorgegebenen Gleichstrom- und Wechselstromleistungspegeln jeweils einen Entwickler auszustoßen.

6. Hochspannungsleistungssteuervorrichtung nach Anspruch 5, wobei das Transformieren jedes der Schaltwellenformsignale, die von der ersten bis N Wechselstromleistungssteuervorrichtung ausgegeben werden, auf den Windungsverhältnissen von jeder der ersten bis N Wechselstromleistungssteuervorrichtung basiert.

7. Verfahren zum Steuern einer Hochspannungsleistung einer Bilderzeugungsvorrichtung, das Folgendes umfasst:
Umwandeln und Ausgeben, durch eine einzelne Gleichstromleistungssteuervorrichtung (200), eines ersten PWM(Pulsweitenmodulation)-Signals, das von einer Motorsteuervorrichtung (1) bereitgestellt wird, in ein Schaltwellenformsignal;
Transformieren des Schaltwellenformsignals von der einzelnen Gleichstromleistungssteuervorrichtung durch einen ersten Spannungswandler (202) in eine Ausgangsleistung;
Gleichrichten, durch einen Gleichrichter (204), der transformierten Ausgangsleistung in Gleichstromleistung;
Einstellen und Ausgeben, durch eine erste bis N, wobei N eine positive ganze Zahl größer als eins ist, Gleichstromversorgung (206, 208...), der gleichgerichteten Gleichstromleistung, derart, dass die Gleichstromleistung auf einen vorgegebenen Pegel eingestellt wird;
Umwandeln und Ausgeben, durch eine erste bis N Wechselstromleistungssteuervorrichtung (214, 216...), die den ersten bis N Gleichstromversorgungen entsprechen, eines zweiten PWM-Signals, das von der Motorsteuervorrichtung (1) bereitgestellt wird, in Schaltwellenformsignale;
Transformieren, durch einen zweiten bis N+1 Spannungstransformator (224, 226...), der Schaltwellenformsignale, die von der ersten bis N Wechselstromleistungssteuervorrichtung ausgegeben werden, um die transformierten Leistungen mit den Gleichstromleistungen mit vorgegebenen Pegeln der ersten bis N Gleichstromversorgung in mehreren Spannungstransformatoren zu überlappen; und
Ausgeben, durch den zweiten bis N+1 Spannungstransformator (224, 226...), der überlappenden Leistungen an den ersten bis N Entwickler (230, 232...).

8. Verfahren zum Steuern einer Hochspannungsleistung einer Bilderzeugungsvorrichtung nach Anspruch 7, wobei das Verfahren ferner Folgendes umfasst:
Teilen, durch einen ersten (R1) und zweiten (R2) Widerstand von jeder der ersten bis N Gleichstromversorgung (206, 208...), der gleichgerichteten Gleichstromleistung;
Vergleichen, durch einen Operationsverstärker von jeder der ersten bis N Gleichstromversorgung (206, 208), eines dritten PWM-Signals mit einer Referenzspannung und Ausgeben eines Vergleichssignals; und
Schalten, durch eine Schalteinheit (SW) von jeder der ersten bis N Gleichstromversorgung (206, 208) entsprechend dem Vergleichssignal, um einen Leistungspegel der Gleichstromleistung einzustellen.

9. Verfahren zum Steuern einer Hochspannungsleistung einer Bilderzeugungsvorrichtung nach Anspruch 8, wobei das Verfahren ferner Folgendes umfasst:
Glätten, durch einen Kondensator (C) von jeder der ersten bis N Gleichstromversorgung (206, 208...), der Welligkeiten der Gleichstromleistung mit dem eingestellten Leistungspegel.

10. Verfahren zum Steuern der Hochspannungsleistung einer Bilderzeugungsvorrichtung nach einem der Ansprüche 7 bis 9, wobei der erste bis N Entwickler (230, 232...) jeweils C (Cyan)-, M (Magenta)-, Y (Gelb)- und K (Schwarz)-Entwickler sind.

## Revendications

1. Appareil de commande d'alimentation haute tension d'un appareil de formation d'images, comprenant :
un dispositif de commande d'alimentation CC (courant continu) (200) unique, adapté pour convertir et délivrer un premier signal MLI (modulation de largeur d'impulsion) fourni depuis un dispositif de commande de moteur (1) en un signal de forme d'onde de commutation ;
un premier transformateur de tension (202) adapté pour transformer la sortie du signal de forme d'onde de commutation depuis le dispositif de commande d'alimentation CC unique ;
un redresseur (204) adapté pour redresser l'alimentation de sortie transformée par le premier transformateur de tension en alimentation CC ;
de premières sources CC (206, 208...) passant par N, où N est un entier positif supérieur à un, adaptées pour régler et délivrer l'alimentation CC redressée par le redresseur (204) de telle sorte que l'alimentation CC est réglée à un niveau prédéterminé ;
de premiers dispositifs de commande d'alimentation CA (courant alternatif) (214, 216...) passant par N correspondant aux premières sources d'alimentation CC passant par N, adaptées pour convertir et délivrer un deuxième signal MLI fourni depuis le dispositif de commande de moteur (1) en signaux de forme d'onde de commutation ; et
de seconds transformateurs de tension (224, 226...) passant par N + 1 adaptés pour transformer les sorties des signaux de forme d'onde de commutation depuis les premiers dispositifs de commandes d'alimentation CA passant par N, pour superposer les alimentations transformées aux alimentations CC ayant des niveaux prédéterminés des premières sources CC passant par N, et pour délivrer les alimentations superposées à de premiers développeurs (230, 232...) passant par N, respectivement.

2. Appareil de commande d'alimentation haute tension selon la revendication 1, dans lequel chacune des premières sources CC (206, 208...) passant par N comprend :
des première (R1) et seconde (R2) résistances adaptées pour diviser l'alimentation CC redressée ;
un amplificateur opérationnel adapté pour comparer une troisième entrée de signal MLI dans un nœud positif de l'amplificateur opérationnel à une entrée de tension de référence dans un nœud négatif de l'amplificateur opérationnel, et pour délivrer un signal de comparaison ; et
une unité de commutation (SW) adaptée pour effectuer une opération de commutation en fonction du signal de comparaison de l'amplificateur opérationnel pour régler un niveau d'alimentation de l'alimentation CC.

3. Appareil de commande d'alimentation haute tension selon la revendication 2, dans lequel chacune des premières sources CC (206, 208...) passant par N comprend en outre :
un condensateur (C) adapté pour lisser les ondulations de l'alimentation CC ayant le niveau d'alimentation réglé.

4. Appareil de commande d'alimentation haute tension selon l'une quelconque des revendications précédentes, dans lequel les premiers développeurs (230, 232...) passant par N sont respectivement des développeurs C (cyan), M (magenta), Y (jaune) et K (noir).

5. Appareil de commande d'alimentation haute tension selon l'une quelconque des revendications précédentes, comprenant :
de premiers développeurs (230, 232...) passant par N adaptés pour expulser chacun un développeur sur la base des niveaux d'alimentation CC et CA prédéterminés.

6. Appareil de commande d'alimentation haute tension selon la revendication 5, dans lequel la transformation de chacune des sorties de signaux de forme d'onde de commutation depuis les premiers dispositifs de commande d'alimentation CA passant par N est basée sur les rapports des nombres de spires de chacun des premiers dispositifs de commandes d'alimentation CA passant par N.

7. Procédé de commande d'alimentation haute tension d'un appareil de formation d'images, comprenant :
la conversion et le fait de délivrer, par un dispositif de commande d'alimentation CC (courant continu) (200) unique, un premier signal MLI (modulation de largeur d'impulsion) fourni depuis un dispositif de commande de moteur (1) en un signal de forme d'onde de commutation ;
la transformation, par un premier transformateur de tension (202), du signal de forme d'onde de commutation depuis le dispositif de commande d'alimentation CC unique en une alimentation de sortie ;
le redressement, par un redresseur (204), de l'alimentation de sortie transformée en alimentation CC ;
le réglage et le fait de délivrer, par les premières sources CC (206, 208...) passant par N, où N est un entier positif supérieur à un, l'alimentation CC redressée de telle sorte que l'alimentation CC est réglée à un niveau prédéterminé ;
la conversion et le fait de délivrer, par de premiers dispositifs de commandes d'alimentation CA (courant alternatif) (214, 216...) passant pas N correspondant aux premières sources d'alimentation CC passant par N, un deuxième signal MLI fourni depuis le dispositif de commande de moteur (1) en signaux de forme d'onde de commutation ;
la transformation, par de seconds transformateurs de tension (224, 226...) passant par N + 1, des sorties de signaux de forme d'onde de commutation depuis les premiers dispositifs de commande d'alimentation CA passant par N pour superposer les alimentations transformées aux alimentations CC ayant des niveaux prédéterminés des premières sources CC passant par N dans une pluralité de transformateurs de tension ; et
le fait de délivrer, par les seconds transformateurs de tension (224, 226...) passant par N + 1, les alimentations superposées aux premiers développeurs (230, 232...) passant par N, respectivement.

8. Procédé de commande d'alimentation haute tension d'un appareil de formation d'images selon la revendication 7, dans lequel le procédé comprend en outre :
la division, par les première (R1) et seconde (R2) résistances de chacune des premières sources CC (206, 208...) passant par N, de l'alimentation CC redressée ;
la comparaison, par un amplificateur opérationnel de chacune des premières sources CC (206, 208) passant par N d'un troisième signal MLI à une tension de référence, et le fait de délivrer un signal de comparaison ; et
la commutation, par une unité de commutation (SW) de chacune des premières sources CC (206, 208) passant par N en fonction du signal de comparaison pour régler un niveau d'alimentation de l'alimentation CC.

9. Procédé de commande d'alimentation haute tension d'un appareil de formation d'images selon la revendication 8, dans lequel le procédé comprend en outre :
le lissage, par un condensateur (C) de chacune des premières sources CC (206, 208...) passant par N, des ondulations de l'alimentation CC ayant le niveau d'alimentation réglé.

10. Procédé de commande d'une alimentation haute tension d'un appareil de formation d'images selon l'une quelconque des revendications 7 à 9, dans lequel les premiers développeurs (230, 232...) passant par N sont respectivement des développeurs C (cyan), M (magenta), Y (jaune) et K (noir).
